(19) Europäisches Patentamt
European Patent Office
Office européen des brevets

(11) **EP 2 371 647 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **11152641.4**

(22) Anmeldetag: **31.01.2011**

(51) Int Cl.:
**B60W 30/16** *(2020.01)* **B60W 10/06** *(2006.01)*
**B60W 10/08** *(2006.01)* **B60W 10/18** *(2012.01)*
**B60W 30/18** *(2012.01)*

(54) **Steuerung eines Energierückgewinnungssystems eines Kraftfahrzeugs**

Control of an energy recovery system on a motor vehicle

Commande d'un système de gain d'énergie d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2010 DE 102010003449**

(43) Veröffentlichungstag der Anmeldung:
**05.10.2011 Patentblatt 2011/40**

(73) Patentinhaber: **Robert Bosch GmbH**
**70442 Stuttgart (DE)**

(72) Erfinder: **Michi, Harald**
**75248, Oelbronn-Duerrn (DE)**

(56) Entgegenhaltungen:
EP-A1- 2 275 314    WO-A2-03/041989
DE-A1-102006 017 176    US-A1- 2008 300 762
US-A1- 2009 024 354    US-B1- 6 177 773

• **Robert Bosch GmbH: "BOSCH Kraftfahrtechnisches Taschenbuch 25. Auflage"**, 1. Oktober 2003 (2003-10-01), Friedr. Vieweg & Sohn Verlag/ GWV Fachverlage GmbH, Wiesbaden, XP002719929, ISBN: 3-528-23876-3 Seiten 418-423, * Seiten 421-422 *

**Beschreibung**

STAND DER TECHNIK

Die Erfindung betrifft eine Steuereinrichtung für ein Kraftfahrzeug mit einem Energierückgewinnungssystem zur Rekuperation von kinetischer Energie des Kraftfahrzeugs mittels eines elektromechanischen Wandlers sowie ein Verfahren zur Steuerung eines Energierückgewinnungssystems eines Kraftfahrzeugs.

Es sind Fahrgeschwindigkeitsregler mit einer Ortungseinrichtung zur Ortung eines vorausfahrenden Fahrzeugs und zur Messung des Abstandes zu diesem bekannt, wobei der Fahrgeschwindigkeitsregler eine Steuereinrichtung aufweist, die dazu ausgebildet ist, ein von der Ortungseinrichtung geortetes Objekt als Zielobjekt auszuwählen und durch Eingriff in das Antriebsund/oder Bremssystem des eigenen Fahrzeugs dessen Beschleunigung zu steuern, um den Abstand zum Zielobjekt auf einen Sollabstand zu regeln (Betriebszustand Folgefahrt), und die Steuereinrichtung weiter dazu ausgebildet ist, die Geschwindigkeit des eigenen Fahrzeugs auf eine vom Fahrer wählbare Wunschgeschwindigkeit zu regeln, wenn kein Zielobjekt vorhanden ist (Betriebszustand Freifahrt). Ein solcher Abstands- und Geschwindigkeitsregler wird auch als ACC-System (Adaptive Cruise Control) bezeichnet. Die Ortungseinrichtung umfasst zumeist einen Radarsensor, mit dem nicht nur der Abstand, sondern auch die Relativgeschwindigkeit des Zielobjekts gemessen werden kann.

Aus DE 10 2006 017 176 A1 ist eine Geschwindigkeitsregelvorrichtung in Form eines ACC-Systems für ein Fahrzeug mit Hybridantrieb bekannt, wobei ein Antriebsmanagementsystem den Hybridantrieb des Fahrzeugs steuert, welcher eine Brennkraftmaschine und einen elektromechanischen Wandler umfasst, der sowohl als Elektromotor als auch als Generator arbeiten kann. Weiter greift das Antriebsmanagementsystem auch in das Bremssystem des Fahrzeugs ein. Wenn ein Bremsbefehl vom Fahrgeschwindigkeitsregler oder vom Fahrer selbst gegeben wird, so entscheidet das Antriebsmanagementsystem, ob die nötige Bremsverzögerung allein mit Hilfe des Generators erreicht werden kann oder ob zusätzlich das herkömmliche, auf Reibungsbremsen basierende Bremssystem des Fahrzeugs aktiviert werden muss.

WO 03/041989 A2 zielt darauf, ein Anfahrverhalten von Kraftfahrzeugen mit einem hydrodynamischen Drehmomentwandler in einem Antriebsstrang ohne Drehmomentwandler, aber mit einem zusätzlichen Motor in Form eines Kurbelwellenstartergenerators zu realisieren. Die Reaktion eines Antriebsstranges mit hydrodynamischen Drehmomentwandler auf die Betätigung des Fahrpedals durch den Fahrer wird modelliert. Aus einem Vergleich des realen Verhaltens und des modellierten Verhaltens wird ein Korrekturwert ermittelt, der in eine Umrechnung des Fahrerwunsches in ein Drehmoment an der Kurbelwelle eingeht.

EP 2 275 314 A1 ist eine nachträglich veröffentlichte europäische Patentanmeldung, die unter Artikel 54(3) EPÜ fällt. Sie betrifft eine Vorrichtung, um einen Fahrer anzuleiten hinsichtlich eines Betätigungsausmaßes eines Bremspedals in einem Fahrzeug, das eine Reibungsbremse und eine Rückgewinnungsbremse hat. Beispielsweise werden dem Fahrer auf einer Anzeige ein aktuellen Betätigungsausmaß der Bremse, ein Betätigungsausmaß, das einer oberen Grenze eines zur Rückgewinnung nutzbaren Betätigungsausmaßes entspricht, und ein zur sicheren Verzögerung zur Erreichung einer Zielgeschwindigkeit an einer Zielposition erforderliches Betätigungsausmaß angezeigt. In die Berechnung der Betätigungsausmaße kann Information über die Steigung der Fahrbahnoberfläche von der aktuellen Position bis zu der Zielposition eingehen.

US 2008/0300762 A1 betrifft eine Bergabfahrtssteuerung mit einer Reibungsbremse und einer Rückgewinnungsbremse. Diese werden in Abhängigkeit der Steigung, auf der das Fahrzeug betrieben wird, und in Abhängigkeit der Geschwindigkeit des Fahrzeugs gesteuert, um mit zunehmender Steigung das Ausmaß des Rückgewinnungsbremsens zu verringern.

Das Dokument Bosch Kraftfahrttechnisches Taschenbuch 25. Auflage, 1. Oktober 2003, ISBN: 3-528-23876-3, Seiten 418 bis 423 (XP-002719929), enthält Angaben zur Berechnung der Hangabtriebskraft.

US 6177773 B1 beschreibt eine Regenerationssteuervorrichtung zur Verwendung in einem Hybridfahrzeug mit einem Akkumulator zum Speichern von durch einen Motor regenerierter elektrischer Energie abhängig von einem Verzögerungsgrad. Es wird die Neigung einer Straße berechnet, und es wird die Regeneration korrigiert gemäß der bestimmten Straßenneigung, während der Motor als der Generator verwendet wird, um den Akkumulator zu laden.

US 2009/0024354 A1 beschreibt die Berechnung eines geschätzten Neigungswertes einer Straße. In einem Beispiel berechnet eine Steuereinrichtung für die Beschleunigung des Fahrzeugs einen feed-forward-Wert, der einem Radachsen-Drehmoment entspricht, unter Berücksichtigung einer Fahrzeugbeschleunigung und einem einer Beschleunigung entsprechenden Wert für den geschätzten Neigungswert. Basierend auf einem Referenzmodell und einem Sollwert der Beschleunigung wird außerdem ein feed-back-Wert berechnet, der einem Radachsen-Drehmoment entspricht.

OFFENBARUNG DER ERFINDUNG

Aufgabe der Erfindung ist es, eine neuartige Steuereinrichtung für ein Kraftfahrzeug mit einem Energierückgewinnungssystem zu schaffen, die eine Rückgewinnung kinetischer Energie unter Berücksichtigung von an ein ACC-System gestellten Anforderungen an Dynamik und Fahrkomfort ermöglicht.

Die Erfindung ist in den unabhängigen Patentansprüchen angegeben.

Bei der Hybrid-Antriebstechnologie ist die Rückgewinnung von kinetischer Energie durch Nutzung der Rekuperationsmöglichkeit des als Generator arbeitenden elektromechanischen Wandlers von großer Bedeutung für eine Verminderung des Kraftstoffverbrauchs.

Ein Beitrag zur Lösung dieser Aufgabe wird hierbei insbesondere durch eine Steuereinrichtung für ein Kraftfahrzeug mit einem Energierückgewinnungssystem zur Rekuperation von kinetischer Energie des Kraftfahrzeugs mittels eines elektromechanischen Wandlers und mit einem Fahrgeschwindigkeitsregler geleistet, der dazu eingerichtet ist, die Sollbeschleunigung des Kraftfahrzeugs einzustellen und zur Steuerung einer der Sollbeschleunigung entsprechenden Beschleunigung des Kraftfahrzeugs in ein Antriebssystem und ein Bremssystem des Kraftfahrzeugs einzugreifen, bei der die Steuereinrichtung einen Steuerungsteil zum Steuern eines quantitativen Maßes der Rekuperation basierend auf der Sollbeschleunigung für das Kraftfahrzeug und einer Fahrbahnsteigung am Ort des Kraftfahrzeugs aufweist. Die Sollbeschleunigung wird von dem zur Beeinflussung der Fahrdynamik eingerichteten Fahrerassistenzsystem in Form des Fahrgeschwindigkeitsreglers vorgegeben.

Bei der Rekuperation wirkt der elektromechanische Wandler als Bremsaggregat, so dass die Rekuperation eine Verzögerung des Kraftfahrzeugs bewirkt. Bei dem quantitativen Maß der Rekuperation kann es sich beispielsweise um ein Rekuperationsmoment oder einen dazu proportionalen Wert handeln oder beispielsweise um eine Rekuperationskraft oder eine Rekuperationleistung. Das Rekuperationsmoment ist beispielsweise gleich einem für die Rekuperation zur Verfügung stehenden Verzögerungsmoment, welches dem für die Rekuperation zur Verfügung stehenden Teil einer negativen Sollbeschleunigung entspricht.

Vorzugsweise ist der Steuerungsteil dazu eingerichtet, bei einer Bestimmung des quantitativen Maßes der Rekuperation entsprechend einer zur Rekuperation zur Verfügung stehenden negativen Sollbeschleunigung je nach positiver oder negativer Fahrbahnsteigung einen Abzug bzw. Aufschlag vorzunehmen, der einer verzögernd oder beschleunigend wirkenden Hangabtriebskraft entspricht. Mit anderen Worten entspricht der Abzug bzw. Aufschlag der verzögernd oder beschleunigend wirkenden Hangabtriebskomponente der Gravitationsbeschleunigung.

Die Fahrbahnsteigung wird vorzugsweise berücksichtigt in Form wenigstens einer von einer Sensoreinrichtung erfassten Messgröße, die von der Fahrbahnsteigung am Ort des Kraftfahrzeugs abhängt. Bei der Sensoreinrichtung kann es sich beispielsweise um einen Beschleunigungssensor zur Erfassung einer Beschleunigung des eigenen Fahrzeugs handeln. Vorzugsweise umfasst die Steuereinrichtung einen Längsbeschleunigungssensor zur Erfassung einer Längsbeschleunigung des eigenen Fahrzeugs.

Vorzugsweise ist der Steuerungsteil ein Steuerungsteil zum Berechnen eines quantitativen Maßes der Rekuperation basierend auf einer Sollbeschleunigung des Kraftfahrzeugs und einer Fahrbahnsteigung am Ort des Kraftfahrzeugs und zum Bestimmen eines auf dem berechneten Maß basierenden Zielwertes für die Steuerung der Rekuperation.

Weiter wird ein Beitrag zur Lösung der genannten Aufgabe erfindungsgemäß durch ein Verfahren zur Steuerung eines Energierückgewinnungssystems eines Kraftfahrzeugs zur Rekuperation von kinetischer Energie des Kraftfahrzeugs mittels eines elektromechanischen Wandlers geleistet, mit den Schritten:

- Bereitstellen einer Sollbeschleunigung für das Kraftfahrzeug durch einen Fahrgeschwindigkeitsregler des Kraftfahrzeugs, der dazu eingerichtet ist, die Sollbeschleunigung des Kraftfahrzeugs einzustellen und zur Steuerung einer der Sollbeschleunigung entsprechenden Beschleunigung des Kraftfahrzeugs in ein Antriebssystem und ein Bremssystem des Kraftfahrzeugs einzugreifen;
- Bereitstellen von Information über eine Fahrbahnsteigung am Ort des Kraftfahrzeugs;
- Bestimmen eines quantitativen Maßes der Rekuperation basierend auf der Sollbeschleunigung und der Fahrbahnsteigung am Ort des Kraftfahrzeugs; und
- Steuern des Energierückgewinnungssystems gemäß dem bestimmten Maß der Rekuperation.

Weitere vorteilhafte Ausgestaltungen der Erfindung sind in den Unteransprüchen angegeben.

KURZE BESCHREIBUNG DER ZEICHNUNGEN

Ausführungsbeispiele der Erfindung sind in den Zeichnungen dargestellt und in der nachfolgenden Beschreibung näher erläutert.

Es zeigen:

Fig. 1    ein Blockdiagramm einer Steuereinrichtung für ein Kraftfahrzeug mit einem Energierückgewinnungssystem und mit einem Fahrgeschwindigkeitsregler; und

Fig. 2    ein Ablaufdiagramm eines Verfahrens zur Steuerung eines Energierückgewinnungssystems eines Kraftfahrzeugs.

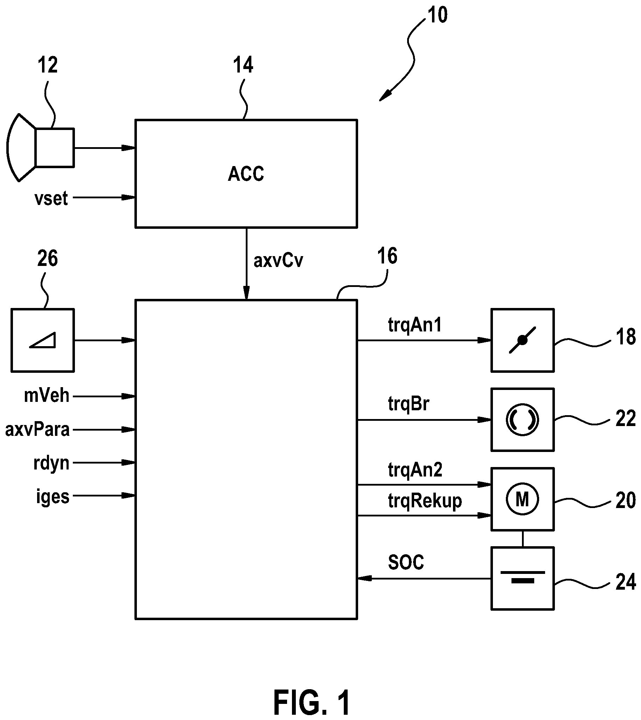

Die in Fig. 1 gezeigte Steuereinrichtung 10 umfasst eine Ortungseinrichtung 12 zur Ortung eines vorausfahrenden Fahrzeugs und zur Messung des Abstandes zu diesem in Form eines Radarsensors, einen Fahrgeschwindigkeitsregler 14 in Form einer ACC-Regeleinheit und einen Steuerungsteil 16 zum Ansteuern eines Antriebs- und Bremssystems des Fahrzeugs, um beispielsweise eine Beschleunigung des Kraftfahrzeugs an eine von dem Fahrgeschwindigkeitsregler 14 eingestellte Sollbeschleunigung axvCv anzupassen.

Das Antriebssystem des Fahrzeugs umfasst ein verbrennungsmotorisches erstes Teilantriebssystem, beispielsweise in Form eines Verbrennungsmotors 18, und ein elektromotorisches zweites Teilantriebssystem in Form eines elektromechanischen Wandlers 20, der sowohl als Elektromotor als auch als Generator arbeiten kann.

Das Bremssystem des Kraftfahrzeugs umfasst ein auf Reibungsbremsen basierendes erstes Teil-Bremssystem in Form eines herkömmlichen Bremssystems 22 sowie ein zweites Teil-Bremssystem in Form des elektromechanischen Wandlers 20.

Der Fahrgeschwindigkeitsregler 14 führt die Funktionen bekannter ACC-Systeme aus und greift durch Vorgabe einer Sollbeschleunigung axvCv über das Steuerungssteil 16 in das Antriebssystem 18, 20 und das Bremssystem 22, 20 des Kraftfahrzeugs ein, um die Beschleunigung des Fahrzeugs so einzustellen, dass in einem Betriebszustand Freifahrt, wenn vom Ortungsgerät 12 kein in der eigenen Spur vorausfahrendes Fahrzeug geortet wird, die Fahrgeschwindigkeit des eigenen Fahrzeugs auf eine vom Fahrer gewählte Wunschgeschwindigkeit vset geregelt wird. Wenn die Ortungseinrichtung 12 mindestens ein vorausfahrendes Fahrzeug in der eigenen Spur feststellt, so wird durch den Fahrgeschwindigkeitsregler 14 das unmittelbar vorausfahrende Fahrzeug als Zielobjekt für die Abstandsregelung in einem Betriebszustand Folgefahrt ausgewählt, und die Beschleunigung wird durch Vorgabe der Sollbeschleunigung axvCv so eingestellt, dass dieses Zielobjekt in einem angemessenen Sollabstand verfolgt wird. Dieser Sollabstand ist beispielsweise durch die sogenannte Zeitlücke definiert, d.h., den zeitlichen Abstand, in dem das Zielobjekt und das eigene Fahrzeug denselben Punkt auf der Fahrbahn passieren.

Der Steuerungsteil 16 übernimmt beispielsweise die Funktion eines herkömmlichen Hybridkoordinators und bildet somit eine Einrichtung zum Einstellen von Antriebsleistungen oder Antriebsmomenten trqAn1, trqAn2 der jeweiligen Teilantriebssysteme 18, 20 und zum Einstellen von Bremsmomenten des Bremssystems 22 und des als Generator arbeitenden elektromechanischen Wandlers 20.

Der elektromechanische Wandler 20 und ein Energiespeichersystem 24, beispielsweise in Form eines Akkumulators, bilden ein Energierückgewinnungssystem zur Rekuperation von kinetischer Energie des Kraftfahrzeugs mittels des elektromechanischen Wandlers 20 und Speicherung dieser Energie in Form elektrischer Energie im Energiespeichersystem 24. Der Steuerungsteil 16 ist beispielsweise dazu eingerichtet, das Energierückgewinnungssystem zu steuern, beispielsweise durch Vorgabe eines quantitativen Maßes der Rekuperation in Form beispielsweise eines Rekuperationsmomentes trqRekup.

Bei der Ansteuerung der jeweiligen Teilantriebssysteme beziehungsweise Teil-Bremssysteme kann der Steuerungsteil 16 beispielsweise einen Ladezustand SOC (state of charge) des Energiespeichersystems 24 berücksichtigen.

In Fig. 1 ist der Steuerungsteil 16 als gesonderter Block neben dem Fahrgeschwindigkeitsregler 14 dargestellt. Bei dem Steuerungsteil 16 kann es sich beispielsweise um einen Bestandteil einer Motorsteuerung, einer Steuereinheit für den elektromechanischen Wandler 20 oder eines anderen Steuergerätes des Kraftfahrzeugs handeln. Der Steuerungsteil 16 kann beispielsweise auch Bestandteil des Fahrgeschwindigkeitsreglers 14 sein. Beispielsweise kann der Fahrgeschwindigkeitsregler 14 durch ein elektronisches Datenverarbeitungssystem gebildet werden, und der Steuerungsteil 16 kann beispielsweise durch ein geeignetes Softwaremodul in dem Fahrgeschwindigkeitsregler 14 gebildet werden.

Der Steuerungsteil 16 empfängt Fahrbahnsteigungsinformationen beispielsweise von einer Sensoreinrichtung 26 zum Erfassen wenigstens einer von der Fahrbahnsteigung am Ort des Fahrzeugs abhängigen Meßgröße. Beispielsweise umfaßt die Sensoreinrichtung 26 einen Beschleunigungssensor, insbesondere beispielsweise einen Längsbeschleunigungssensor zur Erfassung einer Längsbeschleunigung des eigenen Fahrzeugs. Die Sensoreinrichtung 26 kann beispielsweise die vom Beschleunigungssensor erfaßte Meßgröße in die Steigung der Fahrbahn am Ort des Fahrzeugs umwandeln und als Fahrbahnsteigungsinformation ausgeben. Dazu kann die Sensoreinrichtung 26 beispielsweise auf Fahrzeugdaten zugreifen, wie z.B. Verlaufsdaten der momentanen Fahrgeschwindigkeit. Bei der Fahrbahnsteigungsinformation kann es sich alternativ beispielsweise um den auf eine Bergauf- oder Bergabfahrt zurückzuführenden Anteil der Längsbeschleunigung handeln. Der Längsbeschleunigungssensor kann beispielsweise Teil eines ESP-Systems sein (electronic stability program; elektronisches Stabilitätsprogramm).

Alternativ kann der Steuerungsteil 16 dazu eingerichtet sein, Fahrbahnsteigungsinformation anhand fahrdynamischer Größen zu berechnen, beispielsweise gemäß einem Model des Fahrverhaltens. Die Sensoreinrichtung 26 ist somit optional.

Das Steuerungsteil 16 ist dazu eingerichtet, das Rekuperationsmoment trqRekup basierend auf der Sollbeschleunigung axvCv und der Fahrbahnsteigung am Ort des Kraftfahrzeugs zu steuern. Insbesondere ist beispielsweise der Steuerungsteil 16 dazu eingerichtet, das Rekuperationsmoment basierend auf der Sollbeschleunigung und der Fahrbahnsteigung am Ort des Kraftfahrzeuges zu berechnen und einen auf dem berechneten Rekuperationsmoment basierenden Zielwert für die Steuerung der Rekuperation zu bestimmen. Bei dem Zielwert kann es sich beispielsweise um einen Vorgabewert einer Steuerung oder um einen Sollwert einer Regelung der Rekuperation handeln. Beispielsweise wird, wie in Fig. 1 gezeigt, das berechnete Rekuperationsmoment trqRekup als Zielwert für die Steuerung der Rekuperation durch den elektromechanischen Wandler 20 verwendet.

Die Berechnung des Rekuperationsmoments trqRekup wird im folgenden anhand eines Beispiels detaillierter beschrieben.

Beispielsweise ist der Steuerungsteil 16 dazu eingerichtet, zunächst ein quantitatives Maß der Rekuperation axvRekup zu berechnen entsprechend der Gleichung axvRekup = faktor x (axvCv + axvPara + axvRoSlo), wobei axvCv der Sollbeschleunigung entspricht.

Weiter entspricht der (positive) Parameter axvPara einem negativen Beschleunigungsschwellwert, der mindestens einer von dem auf Reibung basierenden Bremssystem 22 des Kraftfahrzeugs zu bewirkenden Mindestbremsverzögerung entspricht. Bei der Rekuperation ist somit die zu bewirkende Mindestbremsverzögerung zusätzlich zur durch die Rekuperation bewirkten Verzögerung zu bewirken. Der (positive) Parameter axvPara kann beispielsweise außerdem eine Schleppverzögerung entsprechend einem im Leerlauf des Antriebssystems wirksamen Schleppmoment umfassen. Ein geeigneter Wert für axvPara ist z. B. 1,0 m/s$^2$. Dabei ist axvPara beispielsweise zumindest bei einer negativen Fahrbahnsteigung vorgesehen, die kleiner gleich einem Schwellwert der Fahrbahnsteigung ist. Dadurch kann sichergestellt werden, daß bei einem dem Schwellwert übersteigenden Fahrbahngefälle das herkömmliche Bremssystem 22 während des Rekuperierens nicht drucklos wird. Alternativ kann auf den Beschleunigungsparameter axvPara auch verzichtet werden (d.h. axvPara = 0), oder axvPara kann stets vorgesehen sein.

Weiter entspricht axvRoSlo einem Repräsentanten für die Fahrbahnsteigung, wobei axvRoSlo ein Beschleunigungswert ist, der gleich einer der Fahrbahnsteigung entsprechenden Gravitationsbeschleunigung in Längsrichtung des Kraftfahrzeugs gegen die Fahrtrichtung ist. Dieser Beschleunigungswert kann beispielsweise, wie oben beschrieben, von der Sensoreinrichtung 26 zur Verfügung gestellt werden.

Ferner ist faktor ein Verstärkungsfaktor. Vorzugsweise ist faktor < 1,0. Ein geeigneter Wertebereich für den Verstärkungsfaktor ist beispielsweise $0,7 \leq faktor \leq 1,0$.

Somit geht in die Berechnung des Maßes der Rekuperation axvRekup die Sollbeschleunigung axvCv und die Fahrbahnsteigung am Ort des Kraftfahrzeuges in Form der Differenz aus der Sollbeschleunigung und dem Repräsentanten axvRoSlo für die Fahrbahnsteigung ein, insbesondere durch Berechnung dieser Differenz. Somit wird die zur Rekuperation zur Verfügung stehende negative Sollbeschleunigung korrigiert durch den Repräsentanten axvRoSlo. Auf diese Weise erfolgt je nach positiver oder negativer Fahrbahnsteigung ein Abzug (axvRoSlo > 0) bzw. ein Aufschlag (axvRoSlo < 0) entsprechend der verzögernd oder beschleunigend wirkenden Hangabtriebskraft.

Die Steuereinrichtung ist vorzugsweise dazu eingerichtet, das Energierückgewinnungssystem 20, 24 zur Rekuperation von kinetischer Energie des Kraftfahrzeugs anzusteuern, um eine Rekuperation zu bewirken, wenn das Maß der Rekuperation axvRekup negativ ist. Dies entspricht beispielsweise bei einer Bergauffahrt dem Fall, daß der (positive) Absolutwert der negativen Sollbeschleunigung die Summe aus dem Parameter axvPara und dem bei Bergauffahrt positiven Wert axvRoSlo übersteigt, d.h., trotz ansteigender Fahrbahn und Mindestbremsverzögerung durch die Reibungsbremseinrichtung steht noch ein darüber hinausgehendes Sollbremsmoment für die Rekuperation zur Verfügung.

Vorzugsweise ist der Steuerungsteil 16 dazu eingerichtet, einen auf dem berechneten axvRekup basierenden Zielwert in Form eines zu axvRekup proportionalen Rekuperationsmoments trqRekup für die Steuerung der Rekuperation zu bestimmen. Beispielsweise wird trqRekup gemäß der folgenden Gleichung bestimmt: trqRekup = mVeh x (- axvRekup) x rdyn/iges, wobei mVeh einer Masse des Kraftfahrzeugs entspricht, rdyn einem dynamischen Rollradius des Kraftfahrzeugs entspricht, und iges einer Gesamtübersetzung des Antriebsstrangs zwischen den Rädern und dem elektromechanischen Wandler entspricht. rdyn entspricht insbesondere einem dynamischen Rollradius der den elektromechanischen Wandler 20 antreibenden Räder des Kraftfahrzeugs. Unter dem dynamischen Rollradius wird der Abstand der Radmitte von der Fahrbahnoberfläche verstanden, wenn sich das Kraftfahrzeug bewegt, insbesondere beispielsweise mit einer definierten Geschwindigkeit von beispielsweise 60 km/h bewegt.

Der Steuerungsteil 16 ist somit dazu eingerichtet, das Energierückgewinnungssystem zur Rekuperation von kinetischer Energie anzusteuern, um eine Rekuperation zu bewirken, wenn das Rekuperationsmoment trqRekup, bei dem es sich ebenfalls um ein quantitatives Maß der Rekuperation handelt, größer als Null ist.

Vorzugsweise ist der Steuerungsteil 16 dazu eingerichtet, das quantitative Maß der Rekuperation auf einen Maximalwert der Rekuperation zu begrenzen. Beispielsweise kann ein positiver Maximalwert für das Rekuperationsmoment von beispielsweise 200 Nm oder 300 Nm vorgesehen sein, oder es kann ein entsprechender negativer Grenzwert als Minimum für axvRekup vorgesehen sein.

Ein über das Rekuperationsmoment trqRekup hinausgehendes, zur Erzielung der Sollbeschleunigung axvCv erforderliches Bremsmoment trqBr wird beispielsweise von dem Steuerungsteil 16 bestimmt, und das herkömmliche Bremssystem 22 wird entsprechend gesteuert.

Der Steuerungsteil 16 ist beispielsweise dazu eingerichtet, mit zunehmendem Absolutwert einer negativen Sollbeschleunigung axvCv, entsprechend einer zunehmenden Sollverzögerung, in einer ersten Stufe eine Verzögerung des Kraftfahrzeugs zunächst lediglich durch das Schleppmoment sowie gegebenenfalls eine entgegen der Fahrtrichtung wirkende Hangabtriebskraft bei Bergauffahrt vorzusehen, in einer zweiten Stufe eine Verzögerung durch Rekuperation vorzusehen und in einer dritten Stufe zusätzlich eine Verzögerung durch das herkömmliche Bremssystem 22 vorzusehen.

Indem bei der quantitativen Festlegung, wie viel kinetische Energie zurückgewandelt wird, die Sollbeschleunigung und die Fahrbahnsteigung berücksichtigt werden, kann die zur Rekuperation verfügbare kinetische Energie besonderes gut ausgenutzt werden. Beispielsweise kann ein Rekuperationsmoment von beispielsweise bis zu 300 Nm vorgesehen sein.

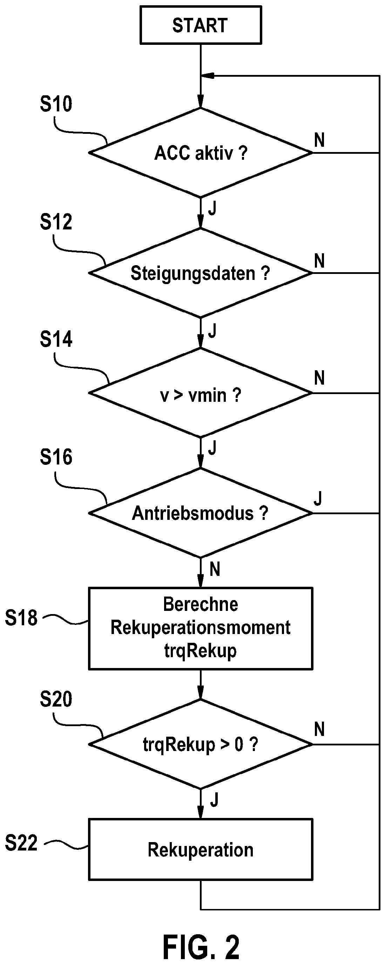

Fig. 2 zeigt schematisch einen Ablaufplan eines Verfahrens zur Steuerung eines Energierückgewinnungssystems eines Kraftfahrzeugs zur Rekuperation von kinetischer Energie des Kraftfahrzeugs mittels eine elektromechanischen Wandlers. Das Verfahren kann beispielsweise von dem Steuerungsteil 16 durchgeführt werden und wird im folgenden unter Bezugnahme auf Fig. 1 und 2 erläutert.

In einem ersten Schritt S10 wird überprüft, ob der Fahrgeschwindigkeitsregler 14 aktiv ist und kein Fehler in der Fahrgeschwindigkeitsregelung aufgetreten ist. Im Fehlerfall, oder wenn der Fahrgeschwindigkeitsregler passiv ist, wird die Rekuperation ohne Berücksichtigung einer Sollbeschleunigung für das Kraftfahrzeug gesteuert, beispielsweise in an sich bekannter Weise.

Bei aktiven Fahrgeschwindigkeitsregler wird in einem nächsten Schritt S12 überprüft, ob Fahrbahnsteigungsdaten, d.h. Informationen über eine Fahrbahnsteigung am Ort des Kraftfahrzeugs vorliegen. Hier kann beispielsweise geprüft werden, ob eine vorgesehene Sensoreinrichtung 26 gültige Daten liefert. Ist dies nicht der Fall, so kann die Rekuperation nicht basierend auf einer Fahrbahnsteigung am Ort des Kraftfahrzeugs gesteuert werden.

Bei Vorliegen gültiger Fahrbahnsteigungsdaten erfolgt in Schritt S14 eine Überprüfung, ob die Fahrgeschwindigkeit oberhalb eines unteren Geschwindigkeitsschwellwertes vmin ist. Ist dies nicht der Fall, erfolgt keine Rekuperation.

Bei ausreichend hoher Fahrgeschwindigkeit wird in Schritt S16 überprüft, ob der Fahrgeschwindigkeitsregler 14 sich im Antriebsmodus befindet. Beispielsweise kann überprüft werden, ob die Sollbeschleunigung axvCv $\geq$ 0 ist. Ist dies der Fall, soll keine Rekuperation stattfinden.

Anderenfalls, beispielsweise im Verzögerungsmodus bei negativer Sollbeschleunigung axvCv, erfolgt in einem Schritt S18 die Berechnung des Rekuperationsmoments, beispielsweise gemäß der oben erläuterten Berechnung von trqRekup als quantitatives Maß der Rekuperation. Schritt S18 umfaßt insbesondere:

- Bereitstellen der Sollbeschleunigung axvCv durch den Fahrgeschwindigkeitsregler 14;
- Bereitstellen von Information über eine Fahrbahnsteigung am Ort des Kraftfahrzeugs, beispielsweise in Form der Fahrbahnsteigungsdaten axvRoSlo; und
- Bestimmen eines quantitativen Maßes der Rekuperation, beispielsweise des Rekuperationsmoments trqRekup, basierend auf der Sollbeschleunigung axvCv und der Fahrbahnsteigung am Ort des Kraftfahrzeugs. Weiterhin kann trqRekup, wie oben erläutert, beispielsweise auf einen Maximalwert der Rekuperation begrenzt werden.

In einem anschließenden Schritt S20 wird überprüft, ob trqRekup > 0 ist. Ist dies nicht der Fall, findet keine Rekuperation statt.

Falls trqRekup > 0, wird in Schritt S22 das Energierückgewinnungssystem 20, 24 gemäß dem bestimmten Maß der Rekuperation trqRekup gesteuert, und es wird gegebenenfalls das herkömmliche Bremssystem 22 gesteuert, um eine Beschleunigung des Kraftfahrzeugs gemäß der Sollbeschleunigung axvCv zu steuern, wie oben erläutert wurde.

Die Schritte S10 bis S22 können beispielsweise in einem wiederholten Zyklus durchlaufen werden.

Durch die Berücksichtigung sowohl der Sollbeschleunigung als auch der Fahrbahnsteigung bei der Steuerung der Rekuperation in der beschriebenen Weise wird es ermöglicht, die an ein die Dynamik beeinflussendes Fahrerassistenzsystem wie beispielsweise ein ACC-System gestellten Anforderungen hinsichtlich Dynamik und Fahrkomfort besonders gut zu erfüllen und zugleich die zur Rekuperation verfügbare Energie möglichst gut auszunutzen. Der Übergang von einer Antriebsteuerung oder -regelung zu einer Verzögerungssteuerung bzw. Regelung unter Einbeziehung der Rekuperation kann gemäß der vorgegebenen Sollbeschleunigung erfolgen. Insbesondere kann erreicht werden, daß auch beim Übergang in einen Rekuperationsmodus die sich aus dem Rekuperationsmoment und gegebenenfalls dem Bremsmoment des herkömmlichen Bremssystems ergebende Verzögerung der von dem Fahrgeschwindigkeitsregler 14 vorgegebenen Sollbeschleunigung entspricht.

**Patentansprüche**

1. Steuereinrichtung für ein Kraftfahrzeug mit einem Energierückgewinnungssystem (20, 24) zur Rekuperation von kinetischer Energie des Kraftfahrzeugs mittels eines elektromechanischen Wandlers (20), wobei die Steuereinrichtung (10) einen Steuerungsteil (16) zum Steuern eines quantitativen Maßes der Rekuperation basierend auf einer Sollbeschleunigung für das Kraftfahrzeug und einer Fahrbahnsteigung am Ort des Kraftfahrzeugs aufweist, **dadurch gekennzeichnet, dass** die Steuereinrichtung (10) weiter einen Fahrgeschwindigkeitsregler (14) aufweist, der dazu eingerichtet ist, die Sollbeschleunigung des Kraftfahrzeugs einzustellen und zur Steuerung einer der Sollbeschleunigung entsprechenden Beschleunigung des Kraftfahrzeugs in ein Antriebssystem (18, 20) und ein Bremssystem (22, 20) des Kraftfahrzeugs einzugreifen, wobei der Steuerungsteil (16) dazu eingerichtet ist, das quantitative Maß der Rekuperation derart zu berechnen, dass die Sollbeschleunigung des Kraftfahrzeugs und die Fahrbahnsteigung am Ort des Kraftfahrzeugs in Form der Differenz aus der Sollbeschleunigung und einem Repräsentanten (axvRoSlo) für die Fahrbahnsteigung in die Berechnung des quantitativen Maßes der Rekuperation eingehen, wobei der Repräsentant für die Fahrbahnsteigung ein Beschleunigungswert ist, der gleich einer der Fahrbahnsteigung entsprechenden Gravitationsbeschleunigung in Längsrichtung des Kraftfahrzeugs ist, und wobei bei einer Berechnung der genannten Differenz zumindest bei einer negativen Fahrbahnsteigung, die kleiner oder gleich einem Schwellwert der Fahrbahnsteigung ist, außerdem ein negativer Beschleunigungsschwellwert von der Sollbeschleunigung subtrahiert wird, der mindestens einer von einer Reibungsbremseinrichtung (22) des Kraftfahrzeugs zu bewirkenden Mindestbremsverzögerung entspricht.

2. Steuereinrichtung nach Anspruch 1, mit einer Sensoreinrichtung (26) zur Erfassung wenigstens einer von der Fahrbahnsteigung am Ort des Kraftfahrzeugs abhängigen Messgröße.

3. Steuereinrichtung nach Anspruch 2, **dadurch gekennzeichnet, dass** die Sensoreinrichtung (26) einen Beschleunigungssensor zur Erfassung einer Beschleunigung des eigenen Fahrzeugs umfasst.

4. Steuereinrichtung nach einem der vorstehenden Ansprüche, bei der der Steuerungsteil (16) dazu eingerichtet ist, ein quantitatives Maß der Rekuperation axvRekup zu berechnen entsprechend der Gleichung axvRekup = faktor x (axvCv + axvPara + axvRoSlo), wobei:

> axvCv der Sollbeschleunigung entspricht;
> axvPara einem negativen Beschleunigungsschwellwert entspricht, der mindestens einer von einer Reibungsbremseinrichtung (22) des Kraftfahrzeugs zu bewirkenden Mindestbremsverzögerung entspricht;
> axvRoSlo einem Repräsentanten für die Fahrbahnsteigung entspricht, wobei der Repräsentant für die Fahrbahnsteigung ein Beschleunigungswert ist, der gleich einer der Fahrbahnsteigung entsprechenden Gravitationsbeschleunigung in Längsrichtung des Kraftfahrzeugs ist; und
> faktor ein Verstärkungsfaktor ist.

5. Steuereinrichtung nach Anspruch 4, wobei der Steuerungsteil (16) dazu eingerichtet ist, einen auf dem berechneten Maß axvRekup basierenden Zielwert in Form eines Rekuperationsmoments trqRekup für die Steuerung der Rekuperation zu bestimmen entsprechend der Gleichung trqRekup = mVeh x (- axvRekup) x rdyn / iges, wobei:

> mVeh einer Masse des Kraftfahrzeugs entspricht;
> rdyn einem dynamischen Rollradius der den elektromechanischen Wandler (20) antreibenden Räder des Kraftfahrzeugs entspricht; und
> iges einer Gesamtübersetzung des Antriebsstrangs zwischen den Rädern und dem elektromechanischen Wandler (20) enspricht.

6. Verfahren zur Steuerung eines Energierückgewinnungssystems (20; 24) eines Kraftfahrzeugs zur Rekuperation von kinetischer Energie des Kraftfahrzeugs mittels eines elektromechanischen Wandlers (20), **gekennzeichnet durch**:

> - Bereitstellen einer Sollbeschleunigung für das Kraftfahrzeug durch einen Fahrgeschwindigkeitsregler (14) des Kraftfahrzeugs, der dazu eingerichtet ist, die Sollbeschleunigung des Kraftfahrzeugs einzustellen und zur Steuerung einer der Sollbeschleunigung entsprechenden Beschleunigung des Kraftfahrzeugs in ein Antriebssystem (18, 20) und ein Bremssystem (22, 20) des Kraftfahrzeugs einzugreifen;
> - Bereitstellen von Information über eine Fahrbahnsteigung am Ort des Kraftfahrzeugs;
> - Bestimmen eines quantitativen Maßes der Rekuperation basierend auf der Sollbeschleunigung und der Fahrbahnsteigung am Ort des Kraftfahrzeugs; und
> - Steuern des Energierückgewinnungssystems (20; 24) gemäß dem bestimmten Maß der Rekuperation,

wobei das quantitative Maß der Rekuperation derart berechnet wird, dass die Sollbeschleunigung des Kraftfahrzeugs und die Fahrbahnsteigung am Ort des Kraftfahrzeugs in Form der Differenz aus der Sollbeschleunigung und einem Repräsentanten (axvRoSlo) für die Fahrbahnsteigung in die Berechnung des quantitativen Maßes der Rekuperation eingehen, wobei der Repräsentant für die Fahrbahnsteigung ein Beschleunigungswert ist, der gleich einer der Fahrbahnsteigung entsprechenden Gravitationsbeschleunigung in Längsrichtung des Kraftfahrzeugs ist, und wobei bei einer Berechnung der genannten Differenz zumindest bei einer negativen Fahrbahnsteigung, die kleiner oder gleich einem Schwellwert der Fahrbahnsteigung ist, außerdem ein negativer Beschleunigungsschwellwert von der Sollbeschleunigung subtrahiert wird, der mindestens einer von einer Reibungsbremseinrichtung (22) des Kraftfahrzeugs zu bewirkenden Mindestbremsverzögerung entspricht.

**Claims**

1. Control device for a motor vehicle having an energy recovery system (20, 24) for recuperating kinetic energy of the motor vehicle by means of an electromechanical transducer (20), wherein the control device (10) has a control part (16) for controlling a quantitative measure of the recuperation on the basis of a setpoint acceleration for the motor vehicle and a carriageway gradient at the location of the motor vehicle,

   **characterized in that** the control device (10) also has a cruise controller (14) which is configured to set the setpoint acceleration of the motor vehicle and to intervene in a drive system (18, 20) and a brake system (22, 20) of the motor vehicle in order to control an acceleration of the motor vehicle which corresponds to the setpoint acceleration,
   wherein the control part (16) is configured to calculate the quantitative measure of the recuperation in such a way that the setpoint acceleration of the motor vehicle and the carriageway gradient at the location of the motor vehicle are included, in the form of the difference between the setpoint acceleration and an exponent (axvRoSlo) of the carriageway gradient, in the calculation of the quantitative measure of the recuperation, wherein the exponent of the carriageway gradient is an acceleration value which is equal to an acceleration due to gravity corresponding to the carriageway gradient, in the longitudinal direction of the motor vehicle, and
   wherein when the specified difference is calculated at least in the case of a negative carriageway gradient which is less than or equal to a threshold value of the carriageway gradient, a negative acceleration threshold value is also subtracted from the setpoint acceleration, which threshold value corresponds at least to a minimum braking deceleration which is to be brought about by a friction brake device (22) of the motor vehicle.

2. Control device according to Claim 1, having a sensor device (26) for sensing at least one measurement variable which is dependent on the carriageway gradient at the location of the motor vehicle.

3. Control device according to Claim 2, **characterized in that** the sensor device (26) comprises an acceleration sensor for sensing an acceleration of the vehicle in question.

4. Control device according to one of the preceding claims, in which the control part (16) is configured to calculate a quantitative measure of the recuperation axvRekup in accordance with the equation axvRekup = factor x (axvCv + axvPara + axvRoSlo), wherein:

   axvCv corresponds to the setpoint acceleration;
   axvPara corresponds to a negative acceleration threshold value which corresponds at least to a minimum braking deceleration which is to be brought about by a friction brake device (22) of the motor vehicle;
   axvRoSlo corresponds to an exponent of the carriageway gradient, wherein the exponent of the carriageway gradient is an acceleration value which is equal to an acceleration due to gravity corresponding to the carriageway gradient, in the longitudinal direction of the motor vehicle; and
   factor is a gain factor.

5. Control device according to Claim 4, wherein the control part (16) is configured to determine a target value which is based on the calculated measure axvRekup and is in the form of a recuperation torque trqRekup for the control of the recuperation, in accordance with the equation

$$\text{trqRekup} = \text{mVeh} \times (-\text{axvRekup}) \times \text{rdyn/iges},$$

where:

mVeh corresponds to a mass of the motor vehicle;
rdyn corresponds to a dynamic rolling radius of the wheels of the motor vehicle which drive the electromechanical transducer (20); and
iges corresponds to an overall transmission ratio of the drive train between the wheels and the electromechanical transducer (20).

6. Method for controlling an energy recovery system (20; 24) of a motor vehicle for recuperating kinetic energy of the motor vehicle by means of an electromechanical transducer (20), **characterized by**:

- making available a setpoint acceleration for the motor vehicle by means of a cruise controller (14) of the motor vehicle, which cruise controller (14) is configured to set the setpoint acceleration of the motor vehicle and to intervene in a drive system (18, 20) and a brake system (22, 20) of the motor vehicle in order to control an acceleration of the motor vehicle which corresponds to to the setpoint acceleration;
- making available information about a carriageway gradient at the location of the motor vehicle;
- determining a quantitative measure of the recuperation on the basis of the setpoint acceleration and the carriageway gradient at the location of the motor vehicle; and
- controlling the energy recovery system (20; 24) according to the determined measure of the recuperation,

wherein the quantitative measure of the recuperation is calculated in that the setpoint acceleration of the motor vehicle and the carriageway gradient at the location of the motor vehicle are included, in the form of the difference between the setpoint acceleration and an exponent (axvRoSlo) of the carriageway gradient, in the calculation of the quantitative measure of the recuperation, wherein the exponent of the carriageway gradient is an acceleration value which is equal to an acceleration due to gravity corresponding to the carriageway gradient, in the longitudinal direction of the motor vehicle, and
wherein when the specified difference is calculated at least in the case of a negative carriageway gradient which is less than or equal to a threshold value of the carriageway gradient, a negative acceleration threshold value is also subtracted from the setpoint acceleration, which threshold value corresponds at least to a minimum braking deceleration which is to be brought about by a friction brake device (22) of the motor vehicle.


**Revendications**

1. Dispositif de commande pour un véhicule automobile doté d'un système (20, 24) de récupération d'énergie configuré pour récupérer l'énergie cinétique du véhicule automobile au moyen d'un convertisseur électromécanique (20), le dispositif de commande (10) présentant une partie de commande (16) qui commande le niveau quantitatif de la récupération sur la base d'une accélération de consigne du véhicule automobile et de la pente de la chaussée à l'emplacement du véhicule automobile,
**caractérisé en ce que**
le dispositif de commande (10) présente en outre un régulateur de vitesse (14) conçu pour régler l'accélération de consigne du véhicule automobile et pour agir sur un système d'entraînement (18, 20) et un système de freinage (22, 20) du véhicule automobile pour commander une accélération du véhicule automobile correspondant à l'accélération de consigne,
**en ce que** la partie de commande (16) est conçue pour calculer le niveau quantitatif de la récupération en faisant intervenir dans le calcul du niveau quantitatif de la récupération l'accélération de consigne du véhicule automobile et la pente de la chaussée à l'emplacement du véhicule automobile sous la forme de la différence entre l'accélération de consigne et une grandeur (axvRoSlo) représentant la pente de la chaussée, la grandeur représentant la pente de la chaussée étant une valeur de l'accélération égale à une accélération gravitationnelle du véhicule automobile dans le sens de sa longueur, qui correspond à la pente de la chaussée et
**en ce que** dans le calcul de ladite différence, au moins lorsque la pente de la chaussée est négative et inférieure ou égale à une valeur de seuil de la pente de la chaussée, une valeur de seuil négative de l'accélération, qui correspond au moins à une décélération minimale de freinage que doit exercer un dispositif (22) de freinage à friction du véhicule automobile, est soustraite de l'accélération de consigne.

2. Dispositif de commande selon la revendication 1, doté d'un dispositif de capteurs (26) qui saisit au moins une grandeur de mesure qui dépend de la pente de la chaussée à l'emplacement du véhicule automobile.

**3.** Dispositif de commande selon la revendication 2, **caractérisé en ce que** le dispositif de capteurs (26) comporte un capteur d'accélération qui saisit une accélération du véhicule automobile proprement dit.

**4.** Dispositif de commande selon l'une des revendications précédentes, dans lequel la partie de commande (16) est conçue pour calculer un niveau quantitatif de récupération axvRekup par l'équation

$$\texttt{axvRekup = faktor x (axvCv + axvPara + axvRoSlo)}$$

dans laquelle :

axvCv correspond à l'accélération de consigne,
axvPara correspond à une valeur de seuil négative de l'accélération qui correspond à une décélération minimale de freinage que doit exercer un dispositif (22) de freinage à friction du véhicule automobile,
axvRoSlo correspond à une grandeur représentant la pente de la chaussée, la grandeur représentant la pente de la chaussée étant une valeur de l'accélération égale à une accélération gravitationnelle du véhicule automobile dans le sens de sa longueur, qui correspond à la pente de la chaussée et
faktor est un facteur d'amplification.

**5.** Dispositif de commande selon la revendication 4, dans lequel la partie de commande (16) est conçue pour déterminer sur la base du niveau calculé de axvRekup une valeur cible qui présente la forme d'un couple de récupération trqRekup utilisé dans la commande de la récupération par l'équation :

$$\texttt{trqRekup = mVeh x (-axvRekup)x rdyn/iges}$$

dans laquelle :

mVeh correspond à une masse du véhicule automobile,
rdyn correspond au rayon de roulement dynamique des roues du véhicule automobile qui entraînent le convertisseur électromécanique (20) et
iges correspond à un rapport de transmission global entre les roues et le convertisseur électromécanique (20) .

**6.** Procédé de commande d'un système (20 ; 24) de récupération d'énergie configuré pour récupérer l'énergie cinétique du véhicule automobile au moyen d'un convertisseur électromécanique (20),
**caractérisé par** les étapes qui consistent à :

- faire délivrer une accélération de consigne du véhicule automobile par un régulateur de vitesse (14) du véhicule automobile qui est conçu pour régler l'accélération de consigne du véhicule automobile et pour agir sur un système d'entraînement (18, 20) et un système de freinage (22, 20) du véhicule automobile pour commander une accélération du véhicule automobile correspondant à l'accélération de consigne,
- tenir disponible une information concernant la pente de la chaussée à l'emplacement du véhicule automobile,
- déterminer un niveau quantitatif de la récupération sur la base de l'accélération de consigne et de la pente de la chaussée à l'emplacement du véhicule automobile,
- commander le système (20 ; 24) de récupération d'énergie en fonction du niveau de récupération qui a été déterminé,

le niveau quantitatif de la récupération étant calculé en faisant intervenir dans le calcul du niveau quantitatif de la récupération l'accélération de consigne du véhicule automobile et la pente de la chaussée à l'emplacement du véhicule automobile sous la forme de la différence entre l'accélération de consigne et une grandeur (axvRoSlo) représentant la pente de la chaussée, la grandeur représentant la pente de la chaussée étant une valeur de l'accélération égale à une accélération gravitationnelle du véhicule automobile dans le sens de sa longueur, qui correspond à la pente de la chaussée et
dans le calcul de ladite différence, au moins lorsque la pente de la chaussée est négative et inférieure ou égale à une valeur de seuil de la pente de la chaussée, une valeur de seuil négative de l'accélération, qui correspond au moins à une décélération minimale de freinage que doit exercer un dispositif (22) de freinage à friction du véhicule automobile, est soustraite de l'accélération de consigne.

10

12

14

16

18

20

22

24

26

ACC

vset

axvCv

trqAn1

trqBr

trqAn2

trqRekup

SOC

mVeh

axvPara

rdyn

iges

M

**FIG. 1**

FIG. 2

**IN DER BESCHREIBUNG AUFGEFÜHRTE DOKUMENTE**

**In der Beschreibung aufgeführte Patentdokumente**

- DE 102006017176 A1
- WO 03041989 A2
- EP 2275314 A1
- US 20080300762 A1
- US 6177773 B1
- US 20090024354 A1


**In der Beschreibung aufgeführte Nicht-Patentliteratur**

- Bosch Kraftfahrttechnisches Taschenbuch. Oktober 2003, vol. 25, 418-423